# EUROPEAN PATENT APPLICATION

(11) **EP 3 757 283 A1**
(43) Date of publication of application: **30.12.2020**
(21) Application number: 19758209.1
(22) Date of filing: 15.02.2019
(51) Int. Cl.: D06M 11/79, C01B 33/18, C01B 33/26, C01F 7/02, D06M 11/45, D21H 17/69

(54) **FIBER COMPOSITE AND METHOD FOR MANUFACTURING SAME**

(30) Priority: 21.02.2018 JP 2018028799; 01.05.2018 JP 2018088003
(71) Applicant: Nippon Paper Industries Co., Ltd., Tokyo 114-0002 (JP)
(72) Inventor: FUCHISE, Moe, Tokyo 114-0002 (JP); MATSUMOTO, Hiroto, Tokyo 114-0002 (JP); NAGAHARA, Dai, Tokyo 114-0002 (JP)
(74) Representative: Cockerton, Bruce Roger
(86) International application number: PCT/JP2019/005508
(87) International publication number: WO 2019/163659

(57) **Abstract**

The present invention aims to provide a technique for preparing a complex fiber covered by silica and/or alumina at a high coverage ratio. According to the present invention, complex fibers comprising silica and/or alumina deposited on the surface of a fiber at a high coverage ratio can be prepared by synthesizing silica and/or alumina on the fiber while maintaining the pH of the reaction solution containing the fiber at 4.6 or less.

## Description

### TECHNICAL FIELD

The present invention relates to complexes of silica and/or alumina with a fiber as well as processes for preparing them.

### BACKGROUND ART

A technique for preparing a complex of silica and/or alumina with a fiber has been proposed in PTL 1.

### CITATION LIST

### PATENT LITERATURE

PTL 1: JPA 2015-199660

### SUMMARY OF INVENTION

### TECHNICAL PROBLEM

However, it was difficult to deposit large amounts of silica on a cellulose fiber or the like, and it was not easy to obtain a fiber covered on the surface of the fiber at a high coverage ratio.
Under such circumstances, the present invention aims to develop a technique for preparing a fiber covered by silica and/or alumina on the surface of a fiber at a high coverage ratio.

### SOLUTION TO PROBLEM

During the development of complexes of silica microparticles with a fiber, we found that complexes of silica and/or alumina with a fiber can be prepared efficiently by synthesizing silica and/or alumina in the presence of the fiber while maintaining the pH at 4.6 or less, and thus accomplished the present invention.

Accordingly, the present invention includes, but not limited to, the following:
(1) A process for preparing a complex fiber comprising silica and/or alumina deposited on the surface of a fiber, comprising synthesizing silica and/or alumina on the fiber while maintaining the pH of the reaction solution containing the fiber at 4.6 or less.
(2) The process of (1), wherein the fiber is a cellulose fiber, a synthetic fiber, or a semisynthetic fiber.
(3) The process of (1) or (2), comprising synthesizing silica and/or alumina using any one or more of an inorganic acid or an aluminum salt and an alkali silicate.
(4) The process of any one of (1) to (3), comprising synthesizing silica and/or alumina using sulfuric acid or aluminum sulfate and sodium silicate.
(5) The process of any one of (1) to (4), wherein the silica and/or alumina on the fiber complex has an average primary particle size of 100 nm or less.
(6) The process of any one of (1) to (5), wherein the silica and/or alumina on the fiber complex is amorphous.
(7) The process of any one of (1) to (6), comprising beating the fiber before synthesizing silica and/or alumina on the fiber.
(8) A process for preparing a sheet, comprising continuously forming a sheet using a paper machine from a slurry containing the complex fiber prepared by the process of any one of (1) to (7).
(9) A complex fiber comprising silica and/or alumina deposited on the surface of a fiber, wherein 30 % or more of the surface of the fiber is covered by inorganic particles of silica and/or alumina.
(10) The complex fiber of (9), wherein the silica and/or alumina deposited on the surface of the fiber is amorphous.
(11) A sheet, molding, board or resin comprising the complex fiber of (9) or (10).
(12) A cement composition comprising the complex fiber of any one of (9) to (11).

### ADVANTAGEOUS EFFECTS OF INVENTION

According to the present invention, fibers covered by silica and/or alumina on their surface at a high coverage ratio can be prepared. Further, sheets with good flame retardancy can be obtained when the sheets comprise such a complex fiber.

### BRIEF DESCRIPTION OF DRAWINGS

Fig. 1 shows electron micrographs of Sample 1 (magnification: left 10000X, right 50000X).
Fig. 2 shows electron micrographs of Sample 2 (magnification: left 10000X, right 50000X).
Fig. 3 shows electron micrographs of Sample 3 (magnification: left 10000X, right 50000X).
Fig. 4 shows electron micrographs of Sample 4 (magnification: left 10000X, right 50000X).
Fig. 5 shows electron micrographs of Sample 5 (magnification: left 10000X, right 50000X).
Fig. 6 shows electron micrographs of Sample 6 (magnification: left 10000X, right 50000X).
Fig. 7 shows electron micrographs of Sample 7 (magnification: left 10000X, right 50000X).
Fig. 8 shows electron micrographs of Sample 8 (magnification: left 10000X, right 50000X).
Fig. 9 shows electron micrographs of Sample 9 (magnification: left 10000X, right 50000X).
Fig. 10 shows electron micrographs of Sample 10 (magnification: left 10000X, right 50000X).
Fig. 11 is a schematic diagram showing the reaction system used in the experimental examples of the present invention.
Fig. 12 shows a photograph of a sample evaluated for flammability in Experiment 2.
Fig. 13 shows a photograph of the sample dehydrated in Experiment 3-1 (1) (magnification: 10000X).
Fig. 14 shows an electron micrograph of Sample A (magnification: 10000X).

### DESCRIPTION OF EMBODIMENTS

In the present invention, complexes of microparticles of silica and/or alumina with a fiber (complex fibers) are prepared by synthesizing silica and/or alumina in a reaction solution containing the fiber.

### Silica and/or alumina

According to the present invention, silica and/or alumina having a small average particle size can be complexed with a fiber. The average primary particle size of the silica and/or alumina microparticles forming part of the complexes of the present invention is less than 1 µm, or the average primary particle size can be less than 500 nm, less than 200 nm, or even 100 nm or less. On the other hand, the average primary particle size of the silica and/or alumina microparticles can be 10 nm or more. In one embodiment, the silica and/or alumina on the fiber complexes are/is amorphous, and therefore differ(s) from zeolites that are crystalline porous aluminosilicates.

Further, the silica and/or alumina obtained by the present invention may take the form of secondary particles resulting from the aggregation of fine primary particles, wherein the secondary particles can be produced to suit the intended purposes via an aging process or aggregates can be broken down by grinding. Grinding means include ball mills, sand grinder mills, impact mills, high pressure homogenizers, low pressure homogenizers, Dyno mills, ultrasonic mills, Kanda grinders, attritors, millstone type mills, vibration mills, cutter mills, jet mills, breakers, beaters, single screw extruders, twin screw extruders, ultrasonic stirrers, juicers/mixers for home use, etc.

The complex fibers obtained by the present invention can be used in various shapes including, for example, powders, pellets, moldings, aqueous suspensions, pastes, sheets and other shapes. Further, the complex fibers can be used as main components with other materials to form molded products such as moldings, particles or pellets. The dryer used to dry them into powder is not specifically limited either, and air-flow dryers, band dryers, spray dryers and the like can be conveniently used, for example.

The average particle size or shape or the like of the inorganic microparticles forming part of the complex fibers of the present invention can be identified by electron microscopic observation. Further, inorganic microparticles having various sizes or shapes can be complexed with a fiber by controlling the conditions under which the inorganic microparticles are synthesized.

The complex fibers obtained by the present invention can be used for various applications. They can be widely used for any applications including, but not limited to, papers, fibers, cellulosic composite materials, filter materials, paints, plastics and other resins, rubbers, elastomers, ceramics, glasses, tires, building materials (asphalt, asbestos, cement, boards, concrete, bricks, tiles, plywoods, fiber boards, decorative plywoods, ceiling materials, wall materials, floor materials, roof materials and the like), various carriers (catalyst carriers, drug carriers, agrochemical carriers, microbial carriers and the like), adsorbents (decontaminants, deodorants, dehumidifying agents and the like), anti-wrinkle agents, clay, abrasives, friction materials, modifiers, repairing materials, thermal insulation materials, thermal resistant materials, heat dissipating materials, damp proofing materials, water repellent materials, waterproofing materials, light shielding materials, sealants, shielding materials, insect repellents, adhesives, inks, cosmetics, medical materials, automobile parts, paste materials, discoloration inhibitors, electromagnetic wave absorbers, insulating materials, acoustic insulation materials, interior materials, vibration damping materials, semiconductor sealing materials, radiation shielding materials, flame retardant materials and the like, for example. They also can be used for various fillers, coating agents and the like in the applications mentioned above. Among them, they are preferably applied for building materials, friction materials, thermal insulation materials and flame retardant materials.

The complex fibers of the present invention are readily applied for papermaking purposes including, for example, printing papers, newsprint papers, inkjet printing papers, PPC papers, kraft papers, woodfree papers, coated papers, coated fine papers, wrapping papers, thin papers, colored woodfree papers, cast-coated papers, carbonless copy papers, label papers, heat-sensitive papers, various fancy papers, water-soluble papers, release papers, process papers, hanging base papers, incombustible papers, flame retardant papers, base papers for laminated boards, battery separators, cushion papers, tracing papers, impregnated papers, papers for ODP, building papers, papers for decorative building materials, envelope papers, papers for tapes, heat exchange papers, chemical fiber papers, aseptic papers, water resistant papers, oil resistant papers, heat resistant papers, photocatalytic papers, cosmetic papers (facial blotting papers and the like), various sanitary papers (toilet papers, facial tissues, wipers, diapers, menstrual products and the like), cigarette rolling papers, paperboards (liners, corrugating media, white paperboards and the like), base papers for paper plates, cup papers, baking papers, abrasive papers, synthetic papers and the like. Thus, the present invention makes it possible to provide complexes of inorganic particles having a small primary particle size and a narrow particle size distribution with a fiber so that they can exhibit different properties from those of conventional inorganic fillers having a particle size of more than 2 µm. Further, the complexes of inorganic particles with a fiber can be formed into sheets in which the inorganic particles are not only more readily retained but also uniformly dispersed without being aggregated in contrast to those in which inorganic particles are simply added to a fiber. In a preferred embodiment, the inorganic particles in the present invention are not only adhered to the outer surface and the inside of the lumen of the fiber but also produced within microfibrils, as proved by the results of electron microscopic observation.

Further, the complex fibers of silica and/or alumina obtained by the present invention can be used typically in combination with particles known as inorganic fillers and organic fillers or various fibers. For example, inorganic fillers include calcium carbonate (precipitated calcium carbonate, ground calcium carbonate), magnesium carbonate, barium carbonate, aluminum hydroxide, calcium hydroxide, magnesium hydroxide, zinc hydroxide, clay (kaolin, calcined kaolin, delaminated kaolin), talc, zinc oxide, zinc stearate, titanium dioxide, silica products prepared from sodium silicate and a mineral acid (white carbon, silica/calcium carbonate complexes, silica/titanium dioxide complexes), terra alba, bentonite, diatomaceous earth, calcium sulfate, zeolite, inorganic fillers recycled from ash obtained in a deinking process and inorganic fillers consisting of complexes of ash with silica or calcium carbonate formed during recycling, etc. In the calcium carbonate-silica complexes, amorphous silicas such as white carbon may also be used in addition to calcium carbonate and/or precipitated calcium carbonate-silica complexes. Organic fillers include urea-formaldehyde resins, polystyrene resins, phenol resins, hollow microparticles, acrylamide complexes, wood-derived materials (microfibers, microfibrillar fibers, kenaf powders), modified/insolubilized starches, ungelatinized starches and the like. Fibers that can be used include, without limitation, not only natural fibers such as celluloses but also synthetic fibers artificially synthesized from raw materials such as petroleum, regenerated fibers (semisynthetic fibers) such as rayon and lyocell, and even inorganic fibers and the like. In addition to the examples mentioned above, natural fibers include protein fibers such as wool and silk yarns and collagen fibers; complex carbohydrate fibers such as chitin-chitosan fibers and alginate fibers and the like. Examples of cellulosic raw materials include pulp fibers (wood pulps and non-wood pulps), and bacterial celluloses, among which wood pulps may be prepared by pulping wood raw materials. Examples of wood raw materials include softwoods such as Pinus densiflora, Pinus thunbergii, Abies sachalinensis, Picea jezoensis, Pinus koraiensis, Larix kaempferi, Abies firma, Tsuga sieboldii, Cryptomeria japonica, Chamaecyparis obtusa, Larix kaempferi, Abies veitchii, Picea jezoensis var. hondoensis, Thujopsis dolabrata, Douglas fir (Pseudotsuga menziesii), hemlock (Conium maculatum), white fir (Abies concolor), spruces, balsam fir (Abies balsamea), cedars, pines, Pinus merkusii, Pinus radiata, and mixed materials thereof; and hardwoods such as Fagus crenata, birches, Alnus japonica, oaks, Machilus thunbergii, Castanopsis, Betula platyphylla, Populus nigra var. italica, poplars, Fraxinus, Populus maximowiczii, Eucalyptus, mangroves, Meranti, Acacia and mixed materials thereof. The technique for pulping the wood raw materials is not specifically limited, and examples include pulping processes commonly used in the papermaking industry. Wood pulps can be classified by the pulping process and include, for example, chemical pulps obtained by digestion via the kraft process, sulfite process, soda process, polysulfide process or the like; mechanical pulps obtained by pulping with a mechanical force such as a refiner, grinder or the like; semichemical pulps obtained by pulping with a mechanical force after a chemical pretreatment; waste paper pulps; deinked pulps and the like. The wood pulps may have been unbleached (before bleaching) or bleached (after bleaching). Examples of non-wood pulps include cotton, hemp, sisal (Agave sisalana), abaca (Musa textilis), flax, straw, bamboo, bagas, kenaf and the like. The wood pulps and non-wood pulps may be unbeaten or beaten. Synthetic fibers include polyesters, polyamides, polyolefins, and acrylic fibers; semisynthetic fibers include rayon, acetate and the like; and inorganic fibers include glass fiber, carbon fiber, various metal fibers and the like. All these may be used alone or as a combination of two or more of them.

### Synthesis of complex fibers

In the present invention, complex fibers comprising silica and/or alumina deposited on the surface of a fiber are prepared by synthesizing silica and/or alumina on the fiber while maintaining the pH of the reaction solution containing the fiber at 4.6 or less. The reason why complex fibers sufficiently covered on the fiber surface are obtained according to the present invention is not known in complete detail, but may be explained as follows: complex fibers with high coverage ratio and adhesion ratio can be obtained probably because trivalent aluminum ions are formed at a high degree of ionization by maintaining a low pH.

In the process for preparing complex fibers (complexes) of the present invention, silica and/or alumina may be synthesized in the presence of a fiber while injecting a liquid. Further in the present invention, cavitation may be generated by injecting a liquid. As used herein, the term "cavitation" refers to a physical phenomenon in which bubbles are generated and disappear in the flow of a fluid in a short time due to a pressure difference. The bubbles generated by cavitation (cavitation bubbles) develop from very small "bubble nuclei" of 100 µm or less present in a liquid when the pressure drops below the saturated vapor pressure in the fluid only for a very short time.

In the present invention, cavitation bubbles can be generated in a reaction vessel by a known method. For example, it is possible to generate cavitation bubbles by injecting a fluid under high pressure, or by stirring at high speed in a fluid, or by causing an explosion in a fluid, or by using an ultrasonic vibrator (vibratory cavitation) or the like.

Particularly in the present invention, cavitation bubbles are preferably generated by injecting a fluid under high pressure because the cavitation bubbles are readily generated and controlled. In this embodiment, a liquid to be injected is compressed by using a pump or the like and injected at high speed through a nozzle or the like, whereby cavitation bubbles are generated simultaneously with the expansion of the liquid itself due to a very high shear force and a sudden pressure drop near the nozzle. Fluid jetting allows cavitation bubbles to be generated with high efficiency, whereby the cavitation bubbles have stronger collapse impact. In the present invention, calcium carbonate is synthesized in the presence of controlled cavitation bubbles, clearly in contrast to the cavitation bubbles spontaneously occurring in fluid machinery and causing uncontrollable risks.

In the present invention, the reaction solution of a raw material or the like can be directly used as a jet liquid, or some fluid can be injected into the reaction vessel. The fluid forming a liquid jet may be any of a liquid, a gas, or a solid such as powder or pulp or a mixture thereof so far as it is in a flowing state. Moreover, another fluid such as carbonic acid gas can be added as an extra fluid to the fluid described above, if desired. The fluid described above and the extra fluid may be injected as a homogeneous mixture or may be injected separately.

The liquid jet refers to a jet of a liquid or a fluid containing solid particles or a gas dispersed or mixed in a liquid, such as a liquid jet containing a pulp or a slurry of inorganic particles or bubbles. The gas referred to here may contain bubbles generated by cavitation.

Cavitation conditions in the present invention are as follow: the cavitation number σ defined above is desirably 0.001 or more and 0.5 or less, preferably 0.003 or more and 0.2 or less, especially preferably 0.01 or more and 0.1 or less. If the cavitation number σ is less than 0.001, little benefit is attained because the pressure difference from the surroundings is small when cavitation bubbles collapse, but if it is greater than 0.5, the pressure difference in the flow is too small to generate cavitation.

When cavitation is generated by emitting a jetting liquid through a nozzle or an orifice tube, the pressure of the jetting liquid (upstream pressure) is more preferably 2 MPa or more and 15 MPa or less. If the upstream pressure is less than 0.01 MPa, little benefit is attained because a pressure difference is less likely to occur from the downstream pressure. If the upstream pressure is higher than 30 MPa, a special pump and pressure vessel are required and energy consumption increases, leading to cost disadvantages. On the other hand, the pressure in the vessel (downstream pressure) is preferably 0.005 MPa or more and 0.9 MPa or less expressed in static pressure. Further, the ratio between the pressure in the vessel and the pressure of the jetting liquid is preferably in the range of 0.001 to 0.5.

In the present invention, inorganic particles can also be synthesized by injecting a jetting liquid under conditions where cavitation bubbles are not generated. Specifically, the pressure of the jetting liquid (upstream pressure) is controlled at 2 MPa or less, preferably 1 MPa or less, while the pressure of the jetting liquid (downstream pressure) is released, more preferably 0.05 MPa or less.

The jet flow rate of the jetting liquid is desirably in the range of 1 m/sec or more and 200 m/sec or less, preferably in the range of 20 m/sec or more and 100 m/sec or less. If the jet flow rate is less than 1 m/sec, little benefit is attained because the pressure drop is too small to generate cavitation. If it is greater than 200 m/sec, however, special equipment is required to generate high pressure, leading to cost disadvantages.

In the present invention, cavitation may be generated in the reaction vessel where microparticles are synthesized. The process can be run in one pass, or can be run through a necessary number of cycles. Further, the process can be run in parallel or in series using multiple generating means.

Liquid injection for generating cavitation may take place in a vessel open to the atmosphere, but preferably takes place within a pressure vessel to control cavitation.

In the present invention, the pH of the reaction solution is basic at the start of the reaction when an alkali silicate is used as a starting material or acid when an inorganic acid or an aluminum salt is used as a starting material, but it changes to neutral as the reaction proceeds. Thus, the reaction can be controlled by monitoring the pH of the reaction solution.

In the present invention, stronger cavitation can be generated by increasing the jetting pressure of the liquid because the flow rate of the jetting liquid increases and accordingly the pressure decreases. Moreover, the impact force can be stronger by increasing the pressure in the reaction vessel because the pressure in the region where cavitation bubbles collapse increases and the pressure difference between the bubbles and the surroundings increases so that the bubbles vigorously collapse. When a gas such as carbonic acid gas is introduced, this also helps to promote the dissolution and dispersion of the gas. The reaction temperature is preferably 0 °C or more and 90 °C or less, especially preferably 10 °C or more and 60 °C or less. Given that the impact force is generally thought to be maximal at the midpoint between the melting point and the boiling point, the temperature is suitably around 50 °C in cases of aqueous solutions, though significant effects can be obtained even at a lower temperature so far as it is within the ranges defined above because there is no influence of vapor pressure.

In the the present invention, the energy required for generating cavitation can be reduced by adding a surfactant. Surfactants that may be used include known or novel surfactants, e.g., nonionic surfactants, anionic surfactants, cationic surfactants and amphoteric surfactants such as fatty acid salts, higher alkyl sulfates, alkyl benzene sulfonates, higher alcohols, alkyl phenols, alkylene oxide adducts of fatty acids and the like. These may be used alone or as a mixture of two or more components. They may be added in any amount necessary for lowering the surface tension of the jetting liquid and/or target liquid.

### Reaction conditions

In the present invention, alumina and/or silica may be synthesized in the presence of a fiber. The synthesis is accomplished by using any one or more of an inorganic acid or an aluminum salt as a starting material of the reaction and adding an alkali silicate. The synthesis can also be accomplished by using an alkali silicate as a starting material and adding any one or more of an inorganic acid or an aluminum salt, but the product adheres to the fiber more efficiently when an inorganic acid and/or aluminum salt is used as a starting material. The complex fibers of silica and/or alumina obtained in the present invention exhibit Si/Al of 4 or more as determined by X-ray fluorescence / X-ray diffraction analysis of the ash remaining after baking in an electric oven at 525 °C for 2 hours. The ratio is preferably 4 to 30, more preferably 4 to 20, still more preferably 4 to 10. Further, no distinct peaks attributed to crystalline materials are detected when the ash is analyzed by X-ray diffraction because silica and/or alumina obtained in the present invention are/is amorphous. Inorganic acids that can be used include, but not specifically limited to, sulfuric acid, hydrochloric acid, nitric acid or the like, for example. Among them, sulfuric acid is especially preferred in terms of cost and handling. Aluminum salts include aluminum sulfate, aluminum chloride, aluminum polychloride, alum, potassium alum and the like, among which aluminum sulfate can be conveniently used. Alkali silicates include sodium silicate or potassium silicate or the like, among which sodium silicate is preferred because of easy availability. The molar ratio of silicate and alkali is not limited, but commercial products having an approximate molar ratio of SiO₂: Na₂O = 3 to 3.4:1 commonly distributed as sodium silicate J3 can be conveniently used. In the present invention, water is used for preparing suspensions or for other purposes, in which case not only common tap water, industrial water, groundwater, well water and the like can be used, but also ion-exchanged water, distilled water, ultrapure water, industrial waste water, and the water obtained in the carbonation step can be conveniently used.

Further in the present invention, the reaction solution can be used in circulation. By circulating the reaction solution in this way, the reaction efficiency increases and a complex can be readily obtained with good efficiency.

For preparing the complexes of the present invention, various known auxiliaries can also be added. For example, chelating agents can be added, specifically including polyhydroxycarboxylic acids such as citric acid, malic acid, and tartaric acid; dicarboxylic acids such as oxalic acid; sugar acids such as gluconic acid; aminopolycarboxylic acids such as iminodiacetic acid and ethylenediamine tetraacetic acid and alkali metal salts thereof; alkali metal salts of polyphosphoric acids such as hexametaphosphoric acid and tripolyphosphoric acid; amino acids such as glutamic acid and aspartic acid and alkali metal salts thereof; ketones such as acetylacetone, methyl acetoacetate and allyl acetoacetate; sugars such as sucrose; and polyols such as sorbitol. Surface-treating agents can also be added, including saturated fatty acids such as palmitic acid and stearic acid; unsaturated fatty acids such as oleic acid and linoleic acid; alicyclic carboxylic acids; resin acids such as abietic acid; as well as salts, esters and ethers thereof; alcoholic activators, sorbitan fatty acid esters, amide- or amine-based surfactants, polyoxyalkylene alkyl ethers, polyoxyethylene nonyl phenyl ether, sodium alpha-olefin sulfonate, long-chain alkylamino acids, amine oxides, alkylamines, quaternary ammonium salts, aminocarboxylic acids, phosphonic acids, polycarboxylic acids, condensed phosphoric acids and the like. Further, dispersants can also be used, if desired. Such dispersants include, for example, sodium polyacrylate, sucrose fatty acid esters, glycerol esters of fatty acids, ammonium salts of acrylic acid-maleic acid copolymers, methacrylic acid-naphthoxypolyethylene glycol acrylate copolymers, ammonium salts of methacrylic acid-polyethylene glycol monomethacrylate copolymers, polyethylene glycol monoacrylate and the like. These can be used alone or as a combination of two or more of them. The timing of adding them is not specifically limited, and such additives can be added preferably in an amount of 0.001 to 20 %, more preferably 0.1 to 10 %.

In the present invention, the reaction conditions are not specifically limited, and can be appropriately selected depending on the purposes. For example, the temperature of the reaction can be 10 to 100 °C, preferably 20 to 90 °C. The reaction temperature can be controlled by regulating the temperature of the reaction solution using a temperature controller, and if the temperature is low, the reaction efficiency decreases and the cost increases, but if it exceeds 90 °C, coarse particles tend to increase.

Further in the present invention, the reaction can be a batch reaction or a continuous reaction. Typically, the reaction is preferably performed as a batch process because of the convenience in removing residues after the reaction. The scale of the reaction is not specifically limited, and can be 100 L or less, or more than 100 L. The volume of the reaction vessel can be, for example, in the order of 10 L to 100 L, or may be in the order of 100 L to 1000 L or 1 m³ (1000 L) to 100 m³.

Further, the reaction can be controlled by monitoring the pH of the reaction suspension, and the reaction can be performed until the pH reaches, for example, pH 2 to 10, preferably pH 3 to 9, more preferably around pH 4 to 8 depending on the pH profile of the reaction suspension. During or after the reaction, an aging period of several minutes to several hours can be provided. The aging period can be expected to promote the adhesion of inorganic materials to the fiber or to provide inorganic materials of a uniform particle size.

Furthermore, the reaction can also be controlled by the reaction period, and specifically it can be controlled by adjusting the period during which the reactants stay in the reaction vessel. In the present invention, the reaction can also be controlled by stirring the reaction solution in the reaction vessel or performing the reaction as a multistage reaction.

In the present invention, the reaction product complex fiber is obtained as a suspension so that it can be stored in a storage tank or subjected to processing such as concentration, dehydration, grinding, classification, aging, or dispersion, as appropriate. These can be accomplished by known processes, which may be appropriately selected taking into account the purposes, energy efficiency and the like. For example, the concentration/dehydration process is performed by using a centrifugal dehydrator, thickener or the like. Examples of such centrifugal dehydrators include decanters, screw decanters and the like. If a filter or dehydrator is used, the type of it is not specifically limited either, and those commonly used can be used, including, for example, pressure dehydrators such as filter presses, drum filters, belt presses and tube presses or vacuum drum filters such as Oliver filters or the like, which can be conveniently used to give a calcium carbonate cake. Grinding means include ball mills, sand grinder mills, impact mills, high pressure homogenizers, low pressure homogenizers, Dyno mills, ultrasonic mills, Kanda grinders, attritors, millstone type mills, vibration mills, cutter mills, jet mills, breakers, beaters, single screw extruders, twin screw extruders, ultrasonic stirrers, juicers/mixers for home use, etc. Classification means include sieves such as meshes, outward or inward flow slotted or round-hole screens, vibrating screens, heavyweight contaminant cleaners, lightweight contaminant cleaners, reverse cleaners, screening testers and the like. Dispersion means include high speed dispersers, low speed kneaders and the like.

The complex fibers obtained by the present invention can be compounded into fillers or pigments as a suspension without being completely dehydrated, or can be dried into powder. The dryer used in the latter case is not specifically limited either, and air-flow dryers, band dryers, spray dryers and the like can be conveniently used, for example.

The complex fibers obtained by the present invention can be modified by known methods. In one embodiment, for example, they can be hydrophobized on their surface to enhance the miscibility with resins or the like.

### Fibers

In the present invention, inorganic microparticles are complexed with a fiber. The fiber forming part of the complexes is not specifically limited, and examples of fibers that can be used include, without limitation, not only natural fibers such as celluloses but also synthetic fibers artificially synthesized from raw materials such as petroleum, semisynthetic fibers such as rayon, and even inorganic fibers and the like.

The fiber length of the fiber to be complexed is not specifically limited, and the average fiber length can be, for example, in the order of 0.2 µm to 15 mm, or may be 1 µm to 12 mm, 100 µm to 10 mm, 200 µm to 9 mm, 500 µm to 8 mm or the like. Further, fibers having a fiber length of 0.2 mm or less commonly known as fines can also be effectively used. On the other hand, the average fiber length is preferably more than 50 µm for dehydration and sheet forming processes. If the average fiber length is more than 200 µm, dehydration and sheet formation are readily possible using the mesh of wires (filters) for dehydration and/or papermaking used in typical papermaking processes.

The fiber diameter of the fiber to be complexed is not specifically limited, and the average fiber diameter can be, for example, in the order of 1 nm to 100 µm, or may be 10 nm to 100 µm, 0.15 µm to 100 µm, 1 µm to 90 µm, 3 to 50 µm, 5 to 30 µm or the like. If the average fiber diameter is more than 500 nm, dehydration and sheet formation become easy. If the average fiber diameter is more than 1 µm, dehydration and sheet formation are readily possible using the mesh of wires (filters) for dehydration and/or papermaking used in typical papermaking processes.

The fiber to be complexed is preferably used in such an amount that 30 % or more of the surface of the fiber is covered by inorganic particles, and the weight ratio between the fiber and the inorganic particles can be, for example, 5/95 to 95/5, or may be 10/90 to 90/10, 20/80 to 80/20, 30/70 to 70/30, or 40/60 to 60/40.
In addition to the examples mentioned above, natural fibers include protein fibers such as wool and silk yarns and collagen fibers; complex carbohydrate fibers such as chitin-chitosan fibers and alginate fibers and the like. Examples of cellulosic raw materials include plant-derived cellulose fibers, pulp fibers (wood pulps and non-wood pulps), and bacterial celluloses, among which wood pulps may be prepared by pulping wood raw materials. Examples of wood raw materials include softwoods such as Pinus densiflora, Pinus thunbergii, Abies sachalinensis, Picea jezoensis, Pinus koraiensis, Larix kaempferi, Abies firma, Tsuga sieboldii, Cryptomeria japonica, Chamaecyparis obtusa, Larix kaempferi, Abies veitchii, Picea jezoensis var. hondoensis, Thujopsis dolabrata, Douglas fir (Pseudotsuga menziesii), hemlock (Conium maculatum), white fir (Abies concolor), spruces, balsam fir (Abies balsamea), cedars, pines, Pinus merkusii, Pinus radiata, and mixed materials thereof; and hardwoods such as Fagus crenata, birches, Alnus japonica, oaks, Machilus thunbergii, Castanopsis, Betula platyphylla, Populus nigra var. italica, poplars, Fraxinus, Populus maximowiczii, Eucalyptus, mangroves, Meranti, Acacia and mixed materials thereof.

The technique for pulping the wood raw materials is not specifically limited, and examples include pulping processes commonly used in the papermaking industry. Wood pulps can be classified by the pulping process and include, for example, chemical pulps obtained by digestion via the kraft process, sulfite process, soda process, polysulfide process or the like; mechanical pulps obtained by pulping with a mechanical force such as a refiner, grinder or the like; semichemical pulps obtained by pulping with a mechanical force after a chemical pretreatment; waste paper pulps; deinked pulps and the like. The wood pulps may have been unbleached (before bleaching) or bleached (after bleaching).

Examples of non-wood pulps include cotton, hemp, sisal (Agave sisalana), abaca (Musa textilis), flax, straw, bamboo, bagas, kenaf and the like.

The pulp fibers may be unbeaten or beaten, and may be chosen depending on the purposes for which the resulting complex fibers are used. Beating allows improving the strength, improving the BET specific surface area and promoting the adhesion of silica/alumina when they are formed into sheets. On the other hand, using unbeaten pulp fibers can not only reduce the risk that inorganic materials may be separated with fibrils when the resulting complex fibers are stirred and/or kneaded in their matrix, but also highly contribute to improving the strength when they are used as reinforcing materials for cement or the like because they can maintain a long fiber length. It should be noted that the degree of beating of a fiber can be expressed by Canadian Standard Freeness (CSF) defined in JIS P 8121-2: 2012. As beating proceeds, the drainage rate through the fiber decreases and the freeness decreases. Fibers having any freeness can be used for the synthesis of the complex fibers, and even those having a freeness of 600 mL or less can be conveniently used. When a complex fiber of the present invention is used to prepare sheets, sheet breaks can be reduced during the process of continuously forming the sheets from a cellulose fiber having a freeness of 600 mL or less. In other words, the freeness decreases by a treatment for increasing the fiber surface area such as beating to improve the strength and specific surface area of complex fiber sheets, but even cellulose fibers having been subjected to such a treatment can be conveniently used. On the other hand, the lower limit of the freeness of cellulose fibers is more preferably 50 mL or more, still more preferably 100 mL or more. If the freeness of cellulose fibers is 200 mL or more, a good runnability can be achieved during continuous sheet forming.

Synthetic fibers include polypropylenes, polyesters, polyamides, polyolefins, acrylic fibers, nylon, polyurethanes, and aramid; semisynthetic fibers include acetate, triacetate, and promix; regenerated fibers include rayon, polynosic, lyocell, cupra, Bemberg and the like; and inorganic fibers include glass fiber, ceramic fiber, biodegradable inorganic fibers, carbon fiber, various metal fibers and the like.

Moreover, these cellulosic raw materials can be further treated, whereby they can also be used as powdered celluloses, chemically modified celluloses such as oxidized celluloses, and cellulose nanofibers (CNFs) (microfibrillated celluloses (MFCs), TEMPO-oxidized CNFs, phosphate esters of CNFs, carboxymethylated CNFs, mechanically ground CNFs and the like). Powdered celluloses used in the present invention may be, for example, rod-like crystalline cellulose powders having a defined particle size distribution prepared by purifying/drying and grinding/sieving the undecomposed residue obtained after acid hydrolysis of an accepted pulp fraction, or may be commercially available products such as KC FLOCK (from Nippon Paper Industries Co., Ltd.), CEOLUS (from Asahi Kasei Chemicals Corp.), AVICEL (from FMC Corporation) and the like. The degree of polymerization of celluloses in the powdered celluloses is preferably in the order of 100 to 1500, and the powdered celluloses preferably have a crystallinity of 70 to 90 % as determined by X-ray diffraction and also preferably have a volume average particle size of 1 µm or more and 100 µm or less as determined by a laser diffraction particle size distribution analyzer. Oxidized celluloses used in the present invention can be obtained by oxidation with an oxidizing agent in water in the presence of an N-oxyl compound and a compound selected from the group consisting of a bromide, an iodide or a mixture thereof, for example. Cellulose nanofibers can be obtained by disintegrating the cellulosic raw materials described above. Disintegration methods that can be used include, for example, mechanically grinding or beating an aqueous suspension or the like of a cellulose or a chemically modified cellulose such as an oxidized cellulose using a refiner, high pressure homogenizer, grinder, single screw or multi-screw kneader, bead mill or the like. Cellulose nanofibers may be prepared by using one or a combination of the methods described above. The fiber diameter of the cellulose nanofibers thus prepared can be determined by electron microscopic observation or the like and falls within the range of, for example, 5 nm to 1000 nm, preferably 5 nm to 500 nm, more preferably 5 nm to 300 nm. During the preparation of the cellulose nanofibers, a given compound can be further added before and/or after the celluloses are disintegrated and/or micronized, whereby it reacts with the cellulose nanofibers to functionalize the hydroxyl groups. Functional groups used for the functionalization include acyl groups such as acetyl, ester, ether, ketone, formyl, benzoyl, acetal, hemiacetal, oxime, isonitrile, allene, thiol, urea, cyano, nitro, azo, aryl, aralkyl, amino, amide, imide, acryloyl, methacryloyl, propionyl, propioloyl, butyryl, 2-butyryl, pentanoyl, hexanoyl, heptanoyl, octanoyl, nonanoyl, decanoyl, undecanoyl, dodecanoyl, myristoyl, palmitoyl, stearoyl, pivaloyl, benzoyl, naphthoyl, nicotinoyl, isonicotinoyl, furoyl and cinnamoyl; isocyanate groups such as 2-methacryloyloxyethyl isocyanate; alkyl groups such as methyl, ethyl, propyl, 2-propyl, butyl, 2-butyl, tert-butyl, pentyl, hexyl, heptyl, octyl, nonyl, decyl, undecyl, dodecyl, myristyl, palmityl, and stearyl; oxirane, oxetane, oxyl, thiirane, thietane and the like. Hydrogens in these substituents may be substituted by a functional group such as hydroxyl or carboxyl. Further, the alkyl groups may be partially unsaturated with an unsaturated bond. Compounds used for introducing these functional groups are not specifically limited and include, for example, compounds containing phosphate-derived groups, compounds containing carboxylate-derived groups, compounds containing sulfate-derived groups, compounds containing sulfonate-derived groups, compounds containing alkyl groups, compounds containing amine-derived groups and the like. Phosphate-containing compounds include, but not specifically limited to, phosphoric acid and lithium salts of phosphoric acid such as lithium dihydrogen phosphate, dilithium hydrogen phosphate, trilithium phosphate, lithium pyrophosphate, and lithium polyphosphate. Other examples include sodium salts of phosphoric acid such as sodium dihydrogen phosphate, disodium hydrogen phosphate, trisodium phosphate, sodium pyrophosphate, and sodium polyphosphate. Further examples include potassium salts of phosphoric acid such as potassium dihydrogen phosphate, dipotassium hydrogen phosphate, tripotassium phosphate, potassium pyrophosphate, and potassium polyphosphate. Still further examples include ammonium salts of phosphoric acid such as ammonium dihydrogen phosphate, diammonium hydrogen phosphate, triammonium phosphate, ammonium pyrophosphate, ammonium polyphosphate and the like. Among them, preferred ones include, but not specifically limited to, phosphoric acid, sodium salts of phosphoric acid, potassium salts of phosphoric acid, and ammonium salts of phosphoric acid, and more preferred are sodium dihydrogen phosphate and disodium hydrogen phosphate because they allow phosphate groups to be introduced with high efficiency so that they are convenient for industrial applications. Carboxyl-containing compounds include, but not specifically limited to, dicarboxylic compounds such as maleic acid, succinic acid, phthalic acid, fumaric acid, glutaric acid, adipic acid, and itaconic acid; and tricarboxylic compounds such as citric acid, and aconitic acid. Acid anhydrides of carboxyl-containing compounds include, but not specifically limited to, acid anhydrides of dicarboxylic compounds such as maleic anhydride, succinic anhydride, phthalic anhydride, glutaric anhydride, adipic anhydride, and itaconic anhydride. Derivatives of carboxyl-containing compounds include, but not specifically limited to, imides of acid anhydrides of carboxyl-containing compounds, and derivatives of acid anhydrides of carboxyl-containing compounds. Imides of acid anhydrides of carboxyl-containing compounds include, but not specifically limited to, imides of dicarboxylic compounds such as maleimides, succinimides, and phthalimides. Derivatives of acid anhydrides of carboxyl-containing compounds are not specifically limited. For example, they include acid anhydrides of carboxyl-containing compounds in which hydrogen atoms are at least partially substituted by a substituent (e.g., alkyl, phenyl or the like) such as dimethylmaleic anhydride, diethylmaleic anhydride, and diphenylmaleic anhydride. Among the compounds containing carboxylate-derived groups listed above, preferred ones include, but not specifically limited to, maleic anhydride, succinic anhydride and phthalic anhydride because they are convenient for industrial applications and can be readily gasified. Further, the cellulose nanofibers may be functionalized by a compound physically adsorbed rather than chemically bonded to the cellulose nanofibers. Compounds to be physically adsorbed include surfactants and the like, which may be anionic, cationic, or nonionic. When the celluloses are functionalized as described above before they are disintegrated and/or ground, these functional groups can be removed, giving back the original hydroxyl groups after they are disintegrated and/or ground. The functionalization as described above can promote disintegration into cellulose nanofibers or help cellulose nanofibers to be mixed with various materials during their use.

The fibers shown above may be used alone or as a mixture of two or more of them. Especially, the complexes preferably comprise a wood pulp or a combination of a wood pulp and a non-wood pulp and/or a synthetic fiber, more preferably a wood pulp alone.

In preferred embodiments, the fiber forming part of the complex fibers of the present invention is a pulp fiber. Alternatively, fibrous materials collected from waste water of a papermaking factory may be supplied to the carbonation reaction of the present invention, for example. Various composite particles including those of various shapes such as fibrous particles can be synthesized by supplying such materials to the reaction vessel.

In the present invention, materials that are not directly involved in the production of inorganic particles but incorporated into the inorganic particles to form composite particles can be used in addition to a fiber. In the present invention, composite particles incorporating inorganic particles, organic particles, polymers or the like can be prepared by synthesizing silica and/or alumina in a solution further containing these materials in addition to a fiber such as a pulp fiber.

### Molded products of the complexes

The complex fibers of the present invention can be used to prepare molded products (articles), as appropriate. For example, the complexes obtained by the present invention can be readily formed into sheets having a high ash content. Paper machines (sheet-forming machines) used for preparing sheets include, for example, Fourdrinier machines, cylinder machines, gap formers, hybrid formers, multilayer paper machines, known sheet-forming machines combining the papermaking methods of these machines and the like. The linear pressure in the press section of the paper machines and the linear calendering pressure in a subsequent optional calendering process can be both selected within a range convenient for the runnability and the performance of the complex sheets. Further, the sheets thus formed may be impregnated or coated with starches, various polymers, pigments and mixtures thereof.

During sheet forming, wet and/or dry strength additives (paper strength additives) can be added. This allows the strength of the complex sheets to be improved. Strength additives include, for example, resins such as urea-formaldehyde resins, melamine-formaldehyde resins, polyamides, polyamines, epichlorohydrin resins, vegetable gums, latexes, polyethylene imines, glyoxal, gums, mannogalactan polyethylene imines, polyacrylamide resins, polyvinylamines, and polyvinyl alcohols; composite polymers or copolymers composed of two or more members selected from the resins listed above; starches and processed starches; carboxymethyl cellulose, guar gum, urea resins and the like. The amount of the strength additives to be added is not specifically limited.

Further, high molecular weight polymers or inorganic materials can be added to promote the adhesion of fillers to fibers or to improve the retention of fillers or fibers. For example, coagulants can be added, including cationic polymers such as polyethylene imines and modified polyethylene imines containing a tertiary and/or quaternary ammonium group, polyalkylene imines, dicyandiamide polymers, polyamines, polyamine/epichlorohydrin polymers, polymers of dialkyldiallyl quaternary ammonium monomers, dialkylaminoalkyl acrylates, dialkylaminoalkyl methacrylates, dialkylaminoalkyl acrylamides and dialkylaminoalkyl methacrylamides with acrylamides, monoamine/epihalohydrin polymers, polyvinylamines and polymers containing a vinylamine moiety as well as mixtures thereof; cation-rich zwitterionic polymers containing an anionic group such as a carboxyl or sulfone group copolymerized in the molecules of the polymers listed above; mixtures of a cationic polymer and an anionic or zwitterionic polymer and the like. Further, retention aids such as cationic or anionic or zwitterionic polyacrylamide-based materials can be used. These may be applied as retention systems called dual polymers in combination with at least one or more cationic or anionic polymers or may be applied as multicomponent retention systems in combination with at least one or more anionic inorganic microparticles such as bentonite, colloidal silica, polysilicic acid, microgels of polysilicic acid or polysilicic acid salts and aluminum-modified products thereof or one or more organic microparticles having a particle size of 100 µm or less called micropolymers composed of crosslinked/polymerized acrylamides. Especially when the polyacrylamide-based materials used alone or in combination with other materials have a weight-average molecular weight of 2,000,000 Da or more, preferably 5,000,000 Da or more as determined by intrinsic viscosity measurement, good retention can be achieved, and when the acrylamide-based materials have a molecular weight of 10,000,000 Da or more and less than 30,000,000 Da, very high retention can be achieved. The polyacrylamide-based materials may be in the form of an emulsion or a solution. Specific compositions of such materials are not specifically limited so far as they contain an acrylamide monomer unit as a structural unit therein, but include, for example, copolymers of a quaternary ammonium salt of an acrylate ester and an acrylamide, or ammonium salts obtained by copolymerizing an acrylamide and an acrylic acid ester, followed by quaternization. The cationic charge density of the cationic polyacrylamide-based materials is not specifically limited.

Other additives include freeness improvers, internal sizing agents, pH modifiers, antifoaming agents, pitch control agents, slime control agents, bulking agents, inorganic particles (the so-called fillers) such as calcium carbonate, kaolin, talc and silica and the like depending on the purposes. The amount of these additives to be used is not specifically limited.

Molding techniques other than sheet forming may also be used, and molded products having various shapes can be obtained by the so-called pulp molding process involving casting a raw material into a mold and then dewatering by suction and drying it or the process involving spreading a raw material over the surface of a molded product of a resin or metal or the like and drying it, and then releasing the dried material from the substrate or other processes. Further, the complexes can be molded like plastics by mixing them with a resin, or can be used in cement boards or concretes by mixing them with a cement. Alternatively, the complexes can be molded like ceramics by calcining them with a mineral such as silica or alumina. In the compounding/drying/molding steps shown above, only one complex can be used, or a mixture of two or more complexes can be used. Two or more complexes can be used as a premix of them or can be mixed after they have been individually compounded, dried and molded.

Further, various organic materials such as polymers or various inorganic materials such as pigments may be added later to the molded products of the complexes.

As described above, the complex fibers of the present invention can be used as cement compositions by mixing them with a cement. Microparticles of silica and/or alumina act as hydraulic materials, while fiber components improve the strength of concrete. As used herein, a cement composition comprises a cement, a cement dispersant and water as essential components, and can further contain an aggregate and other components, if desired. The complex fibers of the present invention can be added in the range of 0.1 to 50 % by mass of the cement composition.

### (1) Cements and aggregates

The cement is not specifically limited. For example, cements that may be used include Portland cements (ordinary, high early strength, very high early strength, moderate heat, and sulfate resisting Portland cements as well as their low alkali types), various blended cements (Portland blast-furnace slag cements, pozzolanic cements, fly ash cements), white Portland cements, aluminous cements, rapid hardening cements (type 1 clinker-based rapid hardening cements, type 2 clinker-based rapid hardening cements, magnesium phosphate cements), grouting cements, oil well cements, low heat cements (low heat Portland blast-furnace slag cements, low heat Portland blast-furnace slag cements mixed with fly ash, belite-rich cements), very high strength cements, cement-based soil stabilizers, ecological cements (cements made from one or more of municipal solid waste incineration bottom ash and sewage sludge incineration bottom ash) and the like. The cements may contain fine powders such as blast-furnace slag, fly ash, cinder ash, clinker ash, husk ash, silica fume, silica powder, lime powder or the like; or gypsum or the like.

Further, the cement compositions may contain an aggregate. The aggregate may be any of fine and coarse aggregates. Aggregates include, for example, sand, gravel, crushed stone; granulated slag; recycled aggregates and the like; and refractory aggregates based on silica refractories, clay refractories, zircon refractories, high alumina refractories, silicon carbide refractories, graphite refractories, chrome refractories, chrome-magnesite refractories, magnesia refractories and the like.

### (2) Cement dispersants

In the present invention, the type of the cement dispersant is not specifically limited. For example, cement dispersants include lignosulfonate-based dispersants, polyol derivative-based dispersants, melamine sulfonate-based dispersants, polystyrene sulfonate-based dispersants; air-entraining water-reducing agents such as hydroxycarboxylic acid salts, naphthalenesulfonate-based dispersants, aminosulfonate-based dispersants, air-entraining and high-range water-reducing agents such as polycarboxylate-based dispersants and the like.

Lignosulfonate-based dispersants include SAN X SCL (from Nippon Paper Industries Co., Ltd.), SAN X SCP (from Nippon Paper Industries Co., Ltd.), SAN X FDL (from Nippon Paper Industries Co., Ltd.), PEARLLEX (from Nippon Paper Industries Co., Ltd.), FLOWRIC VP10 (from Flowric Co., Ltd.), etc.

Hydroxycarboxylic acid salt air-entraining water-reducing agents include FLOWRIC SG (from Flowric Co., Ltd.), FLOWRIC RG (from Flowric Co., Ltd.), FLOWRIC PA (from Flowric Co., Ltd.), FLOWRIC T (from Flowric Co., Ltd.), FLOWRIC TG (from Flowric Co., Ltd.), etc.

Polycarboxylate-based dispersants include FLOWRIC AC (from Flowric Co., Ltd.), FLOWRIC SF500S (from Flowric Co., Ltd.), FLOWRIC SF500SK (from Flowric Co., Ltd.), FLOWRIC SF500H (from Flowric Co., Ltd.), FLOWRIC SF500F (from Flowric Co., Ltd.), FLOWRIC SF500R (from Flowric Co., Ltd.), FLOWRIC SF500RK (from Flowric Co., Ltd.), FLOWRIC SF500HR (from Flowric Co., Ltd.), FLOWRIC SF500FR (from Flowric Co., Ltd.), FLOWRIC VP700 (from Flowric Co., Ltd.), FLOWRIC VP900M (from Flowric Co., Ltd.), FLOWRIC VP900A (from Flowric Co., Ltd.), FLOWRIC PC (from Flowric Co., Ltd.), FLOWRIC SF500FP (from Flowric Co., Ltd.), FLOWRIC TN (from Flowric Co., Ltd.), etc.

Naphthalenesulfonate-based dispersants include FLOWRIC PS (from Flowric Co., Ltd.), FLOWRIC PSR110 (from Flowric Co., Ltd.), etc.

Melamine sulfonate-based dispersants include FLOWRIC MS (from Flowric Co., Ltd.), FLOWRIC NSW (from Flowric Co., Ltd.), etc.

Aminosulfonate-based dispersants include FLOWRIC SF200S (from Flowric Co., Ltd.), FLOWRIC VP200 (from Flowric Co., Ltd.), FLOWRIC NM200 (from Flowric Co., Ltd.), etc.

Mixtures of lignosulfonate-based dispersants and hydroxycarboxylic acid salt air-entraining water-reducing agents include FLOWRIC S (from Flowric Co., Ltd.), FLOWRIC SV (from Flowric Co., Ltd.), FLOWRIC R (from Flowric Co., Ltd.), FLOWRIC RV (from Flowric Co., Ltd.), etc.

Mixtures of lignosulfonate-based dispersants and polycarboxylate-based dispersants include FLOWRIC SV10L (from Flowric Co., Ltd.), FLOWRIC SV10 (from Flowric Co., Ltd.), FLOWRIC SV10H (from Flowric Co., Ltd.), FLOWRIC RV10L (from Flowric Co., Ltd.), FLOWRIC RV10 (from Flowric Co., Ltd.), FLOWRIC RV10H (from Flowric Co., Ltd.), FLOWRIC SS500BB (from Flowric Co., Ltd.), FLOWRIC SS500BBR (from Flowric Co., Ltd.), etc.

Mixtures of lignosulfonate-based dispersants and naphthalenesulfonate-based dispersants include FLOWRIC H60 (from Flowric Co., Ltd.), etc.

Mixtures of hydroxycarboxylic acid salt air-entraining water-reducing agents and polycarboxylate-based dispersants include FLOWRIC SV10K (from Flowric Co., Ltd.), FLOWRIC RV10K (from Flowric Co., Ltd.), FLOWRIC FBP (from Flowric Co., Ltd.), FLOWRIC SF500SK (from Flowric Co., Ltd.), etc.

### Other components

In addition to the cements and cement dispersants, the cement compositions of the present invention can also be combined with known cement additives such as water-soluble polymers, polymer emulsions, air-entraining admixtures, wetting agents for cements, expansive additives, water resisting admixtures, retarding admixtures, thickening agents, coagulants, drying shrinkage reducing admixtures, strength enhancers, set accelerating admixtures, defoamers, air-entraining agents, segregation reducing admixtures, self-leveling agents, corrosion inhibitors, coloring admixtures, anti-mold additives, other surfactants and the like. These may be used alone or as a combination of two or more of them.

The cement compositions described above are useful as concrete such as ready-mixed concrete, concrete for precast concrete, concrete for centrifugal casting, concrete to be consolidated by vibration, steam cured concrete, shotcrete, for example. Further, they are also useful as mortar or concrete required to have high fluidity, such as medium fluidity concrete (i.e., concrete having a slump value in the range of 22 to 25 cm), high fluidity concrete (i.e., concrete having a slump value of 25 cm or more and a slump flow value in the range of 50 to 70 cm), self-compacting concrete, self-leveling materials and the like.

### EXAMPLES

The present invention will be further explained with reference to experimental examples, but the present invention is not limited to these experimental examples. Unless otherwise specified, the concentrations, parts and the like as used herein are based on weight, and the numerical ranges are described to include their endpoints.

### Experiment 1: Synthesis of complexes of silica/alumina particles with a cellulose fiber

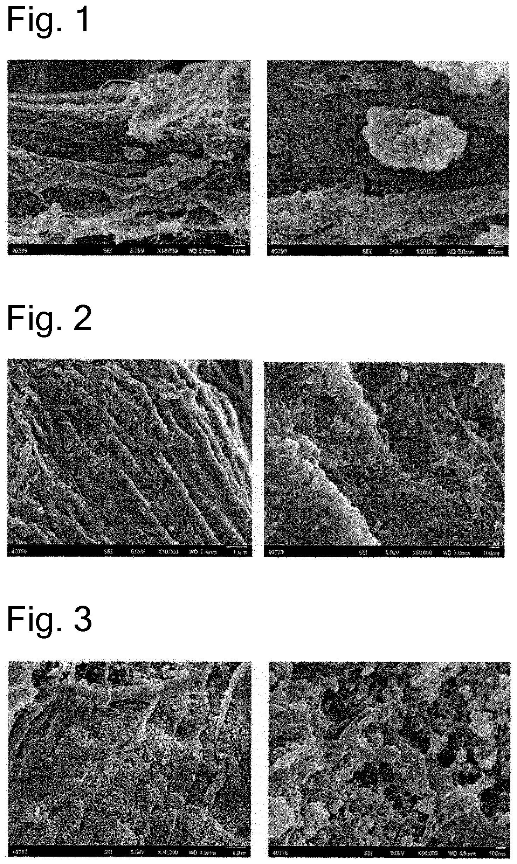

### <Sample 1 (Fig. 1)>

In a 1-L resin vessel, 500 mL of an aqueous suspension containing 2.2 g of a bleached hardwood kraft pulp (LBKP, fiber length: 0.7 mm, Canadian standard freeness CSF: 400 mL) was stirred using a laboratory mixer (500 rpm). To this aqueous suspension was added dropwise an aqueous aluminum sulfate solution (industrial grade aluminum sulfate at about 1.6 % in terms of alumina concentration) for about 2 minutes until the pH reached 3.9, and then an aqueous aluminum sulfate solution (industrial grade aluminum sulfate at about 1.6 % in terms of alumina concentration, 30 g) and an aqueous sodium silicate solution (from Wako Pure Chemical Industries at a concentration of 5 %, 72 g) were added dropwise at the same time for about 30 minutes to maintain the pH at 3.9, thereby synthesizing a complex of silica/alumina microparticles with a fiber. A peristaltic pump was used for the dropwise addition, and the reaction temperature was about 25 °C.

### <Sample 2 (Fig. 2)>

In a 2-L resin vessel, 880 mL of an aqueous suspension containing 4.4 g of a bleached softwood kraft pulp (NBKP, fiber length: 1.0 mm, Canadian standard freeness CSF: 360 mL) was stirred using a laboratory mixer (600 rpm). To this aqueous suspension was added dropwise an aqueous aluminum sulfate solution (industrial grade aluminum sulfate at about 1.6 % in terms of alumina concentration) for about 2 minutes until the pH reached 3.9, and then an aqueous aluminum sulfate solution (industrial grade aluminum sulfate at about 1.6 % in terms of alumina concentration, 25 g) and an aqueous sodium silicate solution (from Wako Pure Chemical Industries at a concentration of 5 %, 41 g) were added dropwise at the same time for about 30 minutes to maintain the pH at 3.9, thereby synthesizing a complex of silica/alumina microparticles with a fiber. A peristaltic pump was used for the dropwise addition, and the reaction temperature was about 25 °C.

### <Sample 3 (Fig. 3)>

To the reaction solution containing Sample 2 was further added dropwise an aqueous sodium silicate solution (from Wako Pure Chemical Industries at a concentration of 5 %, 44 g) for about 4 minutes using a peristaltic pump until the pH reached 8.3, thereby giving a complex sample.

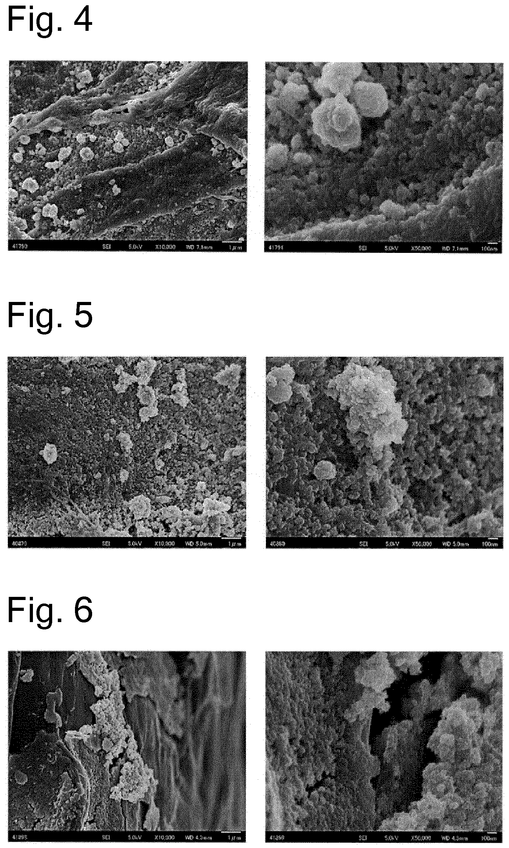

### <Sample 4 (Fig. 4)>

In a stirred metal vessel (having an internal volume of 35 L), 24 L of an aqueous suspension containing 200 g of a bleached softwood kraft pulp (NBKP, fiber length: 1.6 mm, Canadian standard freeness CSF: 510 mL) was stirred (300 rpm) while warming at 45 °C. To this aqueous suspension was added dropwise an aqueous aluminum sulfate solution (industrial grade aluminum sulfate at about 2.7 % in terms of alumina concentration) for about 5 minutes until the pH reached 4.1, and then an aqueous aluminum sulfate solution (industrial grade aluminum sulfate at about 2.7 % in terms of alumina concentration, 1660 g) and an aqueous sodium silicate solution (from Wako Pure Chemical Industries at a concentration of 8 %, 3025 g) were added dropwise at the same time for about 90 minutes to maintain the pH at 4. A peristaltic pump was used for the dropwise addition, and the reaction temperature was about 45 °C. After the dropwise addition, stirring was continued for about 30 minutes, and then an aqueous sodium silicate solution (from Wako Pure Chemical Industries at a concentration of 8 %, 565 g) was added dropwise again for 30 minutes to adjust the pH at 8.0. Thus, a complex of silica/alumina microparticles with a fiber was synthesized.

### <Sample 5 (Fig. 5)>

In a 2-L resin vessel, 900 mL of an aqueous suspension containing 4.4 g of a bleached softwood kraft pulp (NBKP, fiber length: 0.9 mm, Canadian standard freeness CSF: 360 mL) was stirred using a laboratory mixer (600 rpm). To this aqueous suspension was added dropwise an aqueous aluminum sulfate solution (industrial grade aluminum sulfate at about 2.7 % in terms of alumina concentration) for about 4 minutes until the pH reached 3.8, and then an aqueous aluminum sulfate solution (industrial grade aluminum sulfate at about 2.7 % in terms of alumina concentration, 156 g) and an aqueous sodium silicate solution (from Wako Pure Chemical Industries at a concentration of 8 %, 265 g) were added dropwise at the same time for about 60 minutes to maintain the pH at 4. A peristaltic pump was used for the dropwise addition, and the reaction temperature was about 25 °C. Then, an aqueous sodium silicate solution (from Wako Pure Chemical Industries at a concentration of 8 %, 200 g) was added alone dropwise for about 80 minutes to adjust the pH at 7.3. Thus, a complex of silica/alumina microparticles with a fiber was synthesized.

### <Sample 6 (Fig. 6)>

In a 2-L resin vessel, 1060 mL of an aqueous suspension containing 6.5 g of a polypropylene fiber (having a fiber length of 6 mm and adjusted to a CSF of 824 mL by beating the raw material polypropylene fiber from Toabo Material Co., Ltd. with a Niagara beater) was stirred using a laboratory mixer (500 rpm) while warming at 45 °C. To this aqueous suspension was added dropwise an aqueous aluminum sulfate solution (industrial grade aluminum sulfate at about 2.7 % in terms of alumina concentration) for about 2 minutes until the pH reached 3.7, and then an aqueous aluminum sulfate solution (industrial grade aluminum sulfate at about 2.7 % in terms of alumina concentration, 40 g) and an aqueous sodium silicate solution (from Wako Pure Chemical Industries at a concentration of 5 %, 122 g) were added dropwise at the same time for about 80 minutes to maintain the pH at 4. A peristaltic pump was used for the dropwise addition, and the reaction temperature was about 45 °C. Thus, a complex of silica/alumina microparticles with a polypropylene fiber was synthesized.

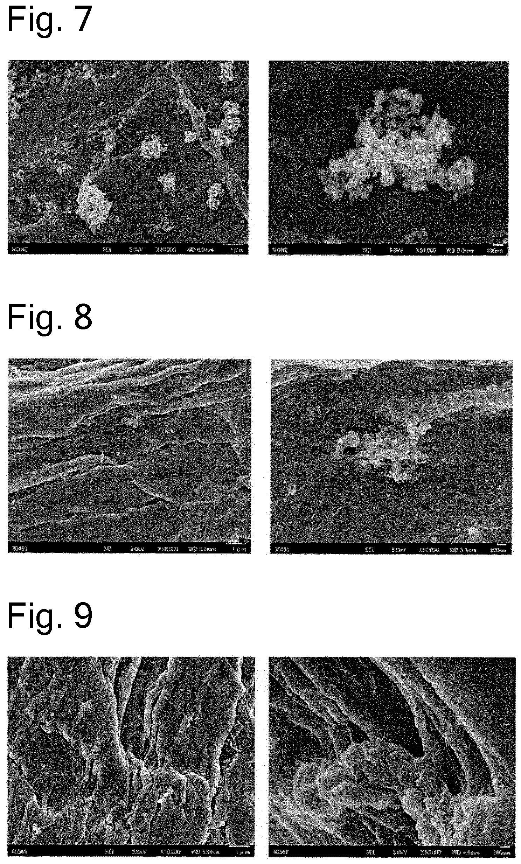

### <Sample 7 (Comparative example, Fig. 7)>

In a 500-mL resin vessel, 220 mL of an aqueous suspension containing 1.1 g of a bleached kraft pulp (LBKP/NBKP = 8/2, average fiber length: 0.68 mm, Canadian standard freeness CSF: 50 mL) was stirred using a laboratory mixer (400 rpm). To this aqueous suspension was added an aqueous aluminum sulfate solution (industrial grade aluminum sulfate at about 0.8 % in terms of alumina concentration, 17 g) all at once (pH = 3.8), and then an aqueous sodium silicate solution (from KOSO CHEMICAL CO., LTD. at a concentration of 10 %, 55 g) was added dropwise using a peristaltic pump (0.6 g/min). The reaction temperature was about 20 °C, and the final pH was 8.0. Thus, a complex of silica/alumina microparticles with a fiber was synthesized.

### <Sample 8 (Comparative example, Fig. 8)>

In a 1-L resin vessel, 500 mL of an aqueous suspension containing 2.2 g of a bleached hardwood kraft pulp (LBKP, fiber length: 0.7 mm, Canadian standard freeness CSF: 400 mL) was stirred using a laboratory mixer (500 rpm). To this aqueous suspension were added dropwise an aqueous aluminum sulfate solution (industrial grade aluminum sulfate at about 1.6 % in terms of alumina concentration, 20 g) and an aqueous sodium silicate solution (from Wako Pure Chemical Industries at a concentration of 5 %, 72 g) at the same time for about 25 minutes to maintain the pH at 8.0. A peristaltic pump was used for the dropwise addition, and the reaction temperature was about 25 °C. Thus, a complex of silica/alumina microparticles with a fiber was synthesized.

### <Sample 9 (Comparative example, Fig. 9)>

In a 1-L resin vessel, 500 mL of an aqueous suspension containing 2.2 g of a bleached hardwood kraft pulp (LBKP, fiber length: 0.7 mm, Canadian standard freeness CSF: 400 mL) was stirred using a laboratory mixer (500 rpm). To this aqueous suspension were added dropwise an aqueous aluminum sulfate solution (industrial grade aluminum sulfate at about 1.6 % in terms of alumina concentration, 18 g) and an aqueous sodium silicate solution (from Wako Pure Chemical Industries at a concentration of 5 %, 62 g) at the same time for about 40 minutes to maintain the pH at 4.7. Then, an aqueous sodium silicate solution (from Wako Pure Chemical Industries at a concentration of 5 %, 10 g) was added alone dropwise for about 10 minutes to adjust the pH at 8.1. A peristaltic pump was used for the dropwise addition, and the reaction temperature was about 26 °C. Thus, a complex of silica/alumina microparticles with a fiber was synthesized.

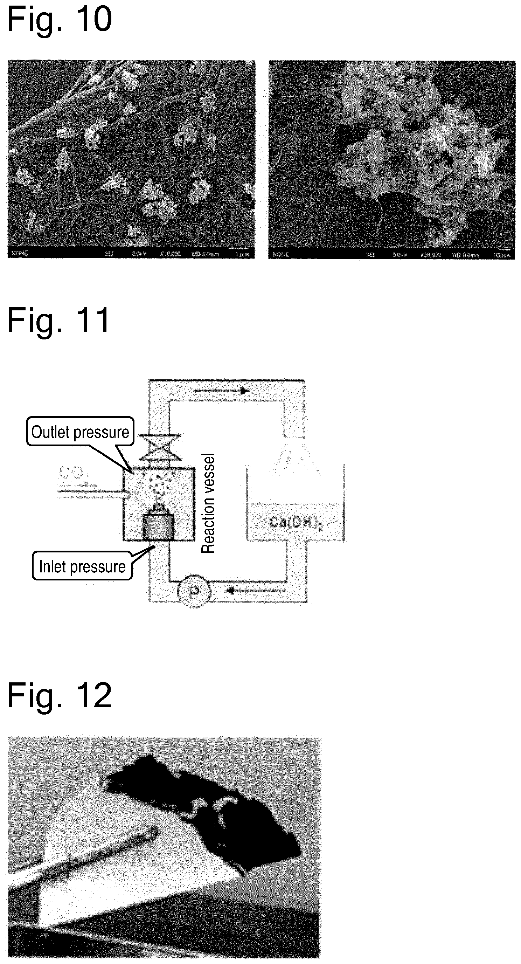

### <Sample 10 (Comparative example, Fig. 10)>

A mixture of 60 g of a bleached kraft pulp (LBKP/NBKP = 8/2, average fiber length: 0.68 mm, CSF: about 50 mL) and an aqueous aluminum sulfate solution (industrial grade aluminum sulfate at 0.8 % in terms of alumina concentration, 58 mL) was diluted to 12 L with tap water (pH = about 4.0). A 45-L cavitation system was charged with 12 L of this aqueous suspension, and 380 g of sodium silicate (about 30 % in terms of SiO2 concentration) was added dropwise into the reaction vessel, and the reaction was stopped when the pH reached about 9.1. Thus, a complex of silica/alumina with a fiber was synthesized.

The synthesis of the complex was performed in the same manner as described in Experiment 3-4 of JPA No. 2015-199660. Thus, cavitation bubbles were generated in the reaction vessel by injecting the reaction solution into the reaction vessel while circulating it, as shown in Fig. 11. Specifically, cavitation bubbles were generated by injecting the reaction solution through a nozzle (nozzle diameter: 1.5 mm) under high pressure at an injection flow rate of about 70 m/s, an inlet pressure (upstream pressure) of 7 MPa and an outlet pressure (downstream pressure) of 0.3 MPa.

**[Table 1]**

| | Examples | | | | | | Comparative examples | | | |
|---|---|---|---|---|---|---|---|---|---|---|
| Sample | 1 | 2 | 3 | 4 | 5 | 6 | 7 | 8 | 9 | 10 |
| Fiber | LBKP | NBKP | NBKP | NBKP | NBKP | Polypropylene | LBKP/NBKP=8/2 | LBKP | LBKP | LBKP/NBKP=8/2 |
| Temperature (°C) | 25 | 25 | 25 | 45 | 25 | 45 | 20 | 25 | 26 | 20 |
| pH during synthesis | 3.9 | 3.9 | 3.9 | 4.1 | 3.8 | 3.7 | 3.8 (at start) → 8.0 (at end) | 8.0 | 4.7 | 4.0 (at start) → 9.1 (at end) |
| pH after synth esis | 3.9 | 3.9 | 8.3 | 8.0 | 7.3 | 3.7 | 8.0 | 8.0 | 8.1 | 9.1 |
| Inorganic fraction (%) | 40.4 | 20.1 | 25.3 | 41.0 | 76.2 | 28.9 | 9.8 | 3.6 | 3.6 | 14.1 |
| Adhesion efficiency (%) | 68.3 | 43.6 | 54.8 | 73.2 | 89.5 | 63.6 | 19.6 | 6.1 | 6.1 | 28.2 |
| Coverage ratio (%) | 98 | 90 | 92 | 90 | 98 | 85 | 18 | 5 | 3 | 13 |

Each of the resulting complex samples was washed with ethanol, and then observed with an electron microscope. The results showed that inorganic materials having a primary particle size in the order of 5 to 20 nm covered the fiber surface and spontaneously adhered to it in each sample.

Further, the coverage ratio on the fiber surface of the resulting complexes was determined to show that all of Samples 1 to 6 corresponding to examples of the present invention had a coverage ratio of 85 % or more, in contrast to Samples 7 to 10 having a coverage ratio of 18 % or less. The coverage ratio (the ratio of the area covered by inorganic particles) on the fiber surface was determined by binarizing the image taken with the electron microscope at a magnification of 10000X into areas occupied by inorganic materials (white) and areas occupied by fibers (black) and calculating the proportion (area ratio) of the white areas, i.e., the areas occupied by inorganic materials to the whole image. The coverage ratio was determined by using an image processing software (ImageJ, U.S. National Institutes of Health).

The mass fraction (inorganic fraction) and adhesion efficiency of inorganic particles in each sample are also shown in the table. The mass fraction (weight ratio) here was determined as follows: each complex slurry was filtered by suction through a filter paper (Advantec, No. 5B) and then the residue was heated at 525 °C for about 2 hours, after which the mass fraction was determined from the ratio between the weight of the remaining ash and the solids content of the original residue (JIS P 8251: 2003). It is known that when a slurry containing silica/alumina is filtered by suction through a filter paper, free inorganic materials pass through the filter paper and are not retained in the residue. Thus, the inorganic fraction determined by this method seems to be a simple means of expressing the amount of inorganic materials adhered to a fiber. On the other hand, the "adhesion efficiency" refers to the percentage calculated by the formula "(the inorganic fraction determined by using a filter paper) / (the inorganic fraction calculated from the amount of sodium silicate added".

### Experiment 2: Preparation of complex sheets

### 2-1. Preparation of complex sheets 1

Circular sheets (radius: about 4.5 cm) having a basis weight 60 g/m² were prepared from complexes obtained in Experiment 1. Specifically, aqueous slurries of Samples 1, 7, and 8 were filtered by suction through a filter paper (Advantec, No. 5B) to form wet webs, which were then dried to give sheets A to C.

The inorganic fraction (ash content) of each of the resulting sheets was determined according to JIS P 8251: 2003.
- the inorganic fraction of sheet A (Sample 1): 40.4 %
- the inorganic fraction of sheet B (Sample 7): 9.8 %
- the inorganic fraction of sheet C (Sample 8): 3.6 %.

The resulting sheets were also evaluated for their flammability. Specifically, each of sheets A to C described above was roughly cut in half to form a semicircular sample, which was ignited at an end thereof with a gas burner and observed for how fire spreads.

Sheet A burned slowly with little flame. It self-extinguished when about a half of the sample burned away (Fig. 12). However, sheets B and C burned with flame and entirely incinerated (not shown).

### 2-2. Preparation of a complex sheet 2

A circular sheet (radius: about 8 cm) having a basis weight of 100 g/m² was prepared from a complex obtained in Experiment 1 described above. Specifically, an aqueous slurry of Sample 5 was stirred at 500 rpm with 100 ppm of a cationic retention aid (ND300 from HYMO CORPORATION) and 100 ppm of an anionic retention aid (FA230 from HYMO CORPORATION) to prepare a paper stock, and then the resulting paper stock was passed through a 150-mesh wire to prepare a handsheet according to JIS P 8222: 2015.

The inorganic fraction (ash content) of the resulting sheet was determined according to JIS P 8251: 2003 to be 65.2 %, showing that a sheet loaded with a high amount of inorganic materials was successfully prepared.

### Experiment 3

### 3-1. Preparation of an inorganic board

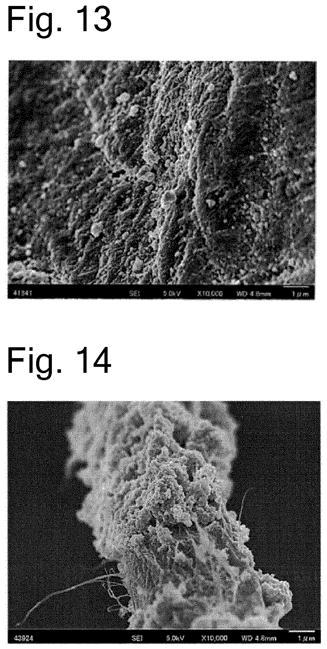

A slurry of Sample 4 was dehydrated through a 100-mesh metal sieve. When no more water was pressed out of the sample on the mesh with hand, dehydration was stopped and the sample was placed in a 35-L bucket. Then, the dehydrated pulp was redispersed in 25 L of tap water in the bucket. Dehydration and redispersion were repeated in the same manner as described above for a total of 3 cycles of dehydration. An electron micrograph of the dehydrated sample is shown in Fig. 13, which demonstrates a high adhesion efficiency as proved by an inorganic fraction (ash content) of 30 %.

Then, an inorganic board can be prepared by the following procedure.
(1) Stir the dehydrated Sample 4 (10 parts) and tap water (100 parts) in a 10-L stirred vessel at 600 rpm for about 1 minute, and then add a Portland cement (from KOMERI Co., Ltd., 100 parts) and stir the mixture for about 5 minutes.
(2) Cast the cement composition into a frame mold with a mesh bottom, and remove the cast from the mold and then cure it with steam at 60 °C for 8 hours.
(3) Dry the cast at 100 °C until a constant mass is reached to give an inorganic board.

### 3-2. Preparation of resin pellets

Resin pellets can be prepared from Sample 1 obtained in Experiment 1 by the following procedure.
(1) Classify a slurry of Sample 1 using a 50-mesh metal sieve to remove long fiber fractions, and then further dehydrate short fiber fractions using a 500-mesh metal sieve. Dehydrate the residue retained on the mesh until no more water is pressed out with hand to give dehydrated Sample 1.
(2) Add the dehydrated Sample 1 as a filler to a resin. The resin used is polypropylene (PP available as J105G from Prime Polymer Co., Ltd.), and 6.2 kg of the resin is combined with 3 kg of Sample 1 on a dry weight basis and 0.8 g of a compatibilizing agent (UMEX 1010 from Sanyo Chemical Industries, Ltd.). Add ion exchanged water to adjust the solids content to 50%.
(3) After thorough mixing, melt/knead the mixture in a twin screw kneader while evaporating water to give pellets of the complex.

### 3-3. Preparation of an inorganic board

An inorganic board can be prepared from Sample 1 obtained in Experiment 1 by the following procedure.
(1) Add tap water to a mixture of calcium hydroxide (from Wako Pure Chemical Industries) and silicic anhydride (from Wako Pure Chemical Industries) in a CaO: SiO₂ molar ratio of 1: 1 to give 10 L of a slurry mixture adjusted to a consistency of 7 %.
(2) Perform a hydrothermal synthesis reaction at a temperature of 210 °C and a pressure of 19 kgf/ cm² with stirring for 4 hours in an autoclave to give a calcium silicate hydrate slurry.
(3) Add 5 parts of Sample 1 and wollastonite (fiber diameter 20 µm, fiber length 260 µm, produced in the United States) to the calcium silicate hydrate slurry per 90 parts by weight of calcium silicate hydrate in the slurry, and homogeneously mix them in a mixer.
(4) Cast the composition into a frame mold with a mesh bottom, and remove the cast from the mold and then cure it with steam at 60 °C for 8 hours.
(5) Dry the cast at 100 °C until a constant mass is reached to give an inorganic board.

### 3-4. Preparation of a molding

In a 30-L bucket, Sample 1 obtained in Experiment 1 was diluted in tap water to prepare a slurry having a consistency of 0.6 % (20 L). A mold with a mesh bottom was attached to the cleaning end of a liquid vacuum cleaner and immersed in the bucket containing the sample, and immediately after then, suction was started. After about 5 seconds of suction, the mold was lifted and suction was continued for 30 seconds. After the completion of suction, the cast was removed from the mold and dried in an oven at 100 °C for 3 hours to give a molding of the complex fiber. The resulting molding had an inorganic fraction (ash content) of 32 %.

### 4. Friction test

### <Synthesis of a complex (Sample A) (Fig. 14)>

In a 30-L vessel, 12 L of an aqueous suspension containing 157 g of a bleached hardwood kraft pulp (LBKP, fiber length: 0.72 mm, Canadian standard freeness CSF: 500 mL) was stirred using an agitator (300 rpm). To this aqueous suspension was added dropwise an aqueous aluminum sulfate solution (industrial grade aluminum sulfate at about 8.9 % in terms of alumina concentration) for about 1 minute until the pH reached 3.9, and then an aqueous aluminum sulfate solution (industrial grade aluminum sulfate at about 8.9 % in terms of alumina concentration, 1380 g) and an aqueous sodium silicate solution (a 3.8-fold dilution available from Osaka Keiso KK, 3664 g) were added dropwise at the same time for about 75 minutes to maintain the pH at 3.9, thereby synthesizing a complex of silica/alumina microparticles with a fiber. A peristaltic pump was used for the dropwise addition, and the reaction temperature was about 25 °C.

### <Evaluation of the complex (Sample A)>

The ash content and coverage ratio of the resulting sample were determined in the same manner as described in Experiment 1-1, showing that it had an ash content of 12 % and a coverage ratio of 86 %. Further, the ash used for the determination of the ash content was analyzed by an X-ray diffractometer (from Shimadzu Corporation) to show no distinct crystalline peaks, confirming that this sample was amorphous. The same ash was analyzed by an X-ray fluorescence analyzer (Bruker) to show that it had Si/Al of 7.1.

### <Preparation of handsheets>

A complex (Sample A) was dehydrated/washed using a metal sieve having a mesh size of 100 µm. The remaining residue was diluted in tap water to adjust the consistency to about 0.5 %. To the slurry were added aluminum sulfate (industrial grade, 1.5 % on a solids basis) and an anionic retention aid (FA230 from HYMO CORPORATION, 100 ppm on a solids basis) and a cationic retention aid (ND300 from HYMO CORPORATION, 100 ppm on a solids basis) with stirring using a Three-One Motor agitator (500 rpm). This slurry was used as a raw material to prepare a handsheet having a basis weight of about 80 g/m² according to JIS P 8222: 2015 using a 150-mesh wire in a square handsheet former.

The LBKP used for the preparation of sample A was also formed into a sheet by the same procedure.

### <Friction test>

The sheets of sample A and LBKP obtained as described above were subjected to a friction test on the F side (felt side) according to ISO 15359: 1999 using an ISO friction tester (from NOMURA SHOJI CO., LTD.). The coefficients of static friction at the first slide are shown in Table 2. The results showed that the pulp sheet comprising silica/alumina adhered to the surface has higher static friction performance than the sheet formed from the pulp alone.

**[Table 2]**

| | Sheet of sample A | Sheet of LBKP |
|---|---|---|
| Inorganic fraction (%) | 12 | 0 |
| Basis weight (g/cm²) | 89.9 | 81.0 |
| Coefficients of static friction | 0.92 | 0.68 |

## Claims

1. A process for preparing a complex fiber comprising silica and/or alumina deposited on the surface of a fiber, comprising synthesizing silica and/or alumina on the fiber while maintaining the pH of the reaction solution containing the fiber at 4.6 or less.

2. The process of claim 1, wherein the fiber is a cellulose fiber, a synthetic fiber, a semisynthetic fiber or a regenerated fiber.

3. The process of claim 1 or 2, comprising synthesizing silica and/or alumina using any one or more of an inorganic acid or an aluminum salt and an alkali silicate.

4. The process of any one of claims 1 to 3, comprising synthesizing silica and/or alumina using sulfuric acid or aluminum sulfate and sodium silicate.

5. The process of any one of claims 1 to 4, wherein the silica and/or alumina on the fiber complex has an average primary particle size of 100 nm or less.

6. The process of any one of claims 1 to 5, wherein the silica and/or alumina on the fiber complex is amorphous.

7. The process of any one of claims 1 to 6, comprising beating the fiber before synthesizing silica and/or alumina on the fiber.

8. A process for preparing a sheet, comprising continuously forming a sheet using a paper machine from a slurry containing the complex fiber prepared by the process of any one of claims 1 to 7.

9. A complex fiber comprising silica and/or alumina deposited on the surface of a fiber, wherein 30 % or more of the surface of the fiber is covered by inorganic particles of silica and/or alumina.

10. The complex fiber of claim 9, wherein the silica and/or alumina deposited on the surface of the fiber is amorphous.

11. A sheet, molding, board or resin comprising the complex fiber of claim 9 or 10.

12. A cement composition comprising the complex fiber of any one of claims 9 to 11.
